# EUROPÄISCHE PATENTSCHRIFT

(11) **EP 2 105 815 B1**
(45) Veröffentlichungstag und Bekanntmachung des Hinweises auf die Patenterteilung: **09.03.2016**
(21) Anmeldenummer: 08005465.3
(22) Anmeldetag: 25.03.2008
(51) Int. Cl.: G05B 19/408

(54) **Verfahren zum Erstellen eines NC-Steuerungsprogramms**
Method for creating a NC control program
Procédé de création d'un programme de commande NC

(43) Veröffentlichungstag der Anmeldung: 30.09.2009
(73) Patentinhaber: TRUMPF Maschinen Grüsch AG, 7214 Grüsch (CH)
(72) Erfinder: Mienhardt, Uwe, 70825 Korntal-Münchingen (DE); Lehmann, David, 7212 Seewis (CH)
(74) Vertreter: Kohler Schmid Möbus Patentanwälte

(56) Entgegenhaltungen:
- EP-A- 0 207 998
- EP-A- 0 592 682
- WO-A-01/50404
- US-A- 4 446 525
- US-A- 5 544 046
- I. BLACK ET AL: "A laser beam machining (LBM) database for the cutting of ceramic tile", JOURNAL OF MATERIALS PROCESSING TECHNOLOGY, vol. 84, no. 1-3, 1 December 1998 (1998-12-01), pages 47-55, XP055175773, ISSN: 0924-0136, DOI: 10.1016/S0924-0136(98)00078-8

## Beschreibung

Die vorliegende Erfindung betrifft ein Verfahren zum Erstellen eines NC-Steuerungsprogramms für die Steuerung eines Testlaufs zur Erzeugung mindestens einer Testkontur für die Ermittlung, Optimierung und/oder Absicherung von Bearbeitungsparametern und/oder Regelparametern eines Bearbeitungsprozesses an einer Laserbearbeitungsmaschine, sowie ein Computerprogrammprodukt zur Durchführung des Verfahrens.

An Laserbearbeitungsmaschinen sind in Entwicklungs-, Schulungs- und Vorführabteilungen des Herstellers, bei Kundendiensteinsätzen oder auch durch den Kunden Tests für die Ermittlung von Bearbeitungsparametern und/oder Regelparametern erforderlich, da diese in Abhängigkeit von der gewählten Bearbeitungsaufgabe stark variieren können.

So können mit einer Laserbearbeitungsmaschine unterschiedlichste Werkstoffe bearbeitet werden, wie z.B. Baustahl (unbeschichtet, elektrolytisch oder feuerverzinkt), rostfreier Stahl oder Aluminium. Je nach Material und Dicke des zu bearbeitenden Werkstücks kommen z.B. beim Laserschneiden unterschiedliche Schneidverfahren (Sauerstoffschneiden, Stickstoff-Hochdruckschneiden, Stickstoff-, Sauerstoff- oder Druckluft-Hochgeschwindigkeitsschneiden, Druckluftschneiden oder plasmaunterstütztes Schneiden) zum Einsatz. In Abhängigkeit von Werkstoff, Werkstückdicke und Schneidverfahren müssen unterschiedlichste technologische Randbedingungen berücksichtigt werden, z.B. Einstech- und Anfahrmethoden, geometrische Grenzwerte beim Anfahren und bei den Konturgrößen, minimale Rundungsradien oder Abstände zu Nachbarteilen. Außerdem können Laserschneidmaschinen mit Lasern unterschiedlicher Leistung ausgestattet werden.

Prozesssichere und qualitativ hochwertige Bearbeitungsergebnisse können nur erzielt werden, wenn die je nach Materialart, Materialdicke und Schneidverfahren variierenden Randbedingungen genau berücksichtigt werden. Zur Steuerung der Materialbearbeitung mit einer Laserschneidmaschine unter Berücksichtigung der einzuhaltenden Randbedingungen müssen daher für jeden Lasertyp verschiedene Parameter-Datensätze bekannt sein oder ermittelt werden. Ein solcher Datensatz besteht typischer Weise aus Bearbeitungsparametern und Regelparametern. Die Bearbeitungsparameter umfassen z.B. die Fokuslage, die Laserleistung, den Gasdruck und die Verfahrgeschwindigkeit und beinhalten (Zahlen-)Werte für das prozesssichere Einstechen, Schneiden von unterschiedlichen Konturgrößen, Kennzeichnen, Körnen, Abdampfen und Schweißen. Die Regelparameter definieren abhängig von der auszuführenden Bearbeitung, unter welchen Bedingungen was gemacht werden soll, also welche Bearbeitungsparameter im Steuerungsprogramm aufgerufen werden und welche geometrischen Randbedingungen (z.B. Anfahrlängen in Abhängigkeit von der Werkstückdicke, notwendige Rundungsradien an Ecken der Kontur, minimal zulässige Konturen,...) einzuhalten sind.

Bei der Ermittlung oder Überprüfung solcher Datensätze für die Steuerung der Lasermaterialbearbeitung ergeben sich folgende Aufgaben: Die Ermittlung und Optimierung von geeigneten Bearbeitungsparametern (z.B. Fokuslage, Schneidgasdruck, Laserleistung, Tastfrequenz,....) für verschiedene Bearbeitungsarten wie Einstechen, Schneiden, Kennzeichnen, Körnen, Abdampfen, Schweißen unter Berücksichtigung der Regelparameter, die Ermittlung von Regelparametern, die Absicherung der Bearbeitungsparameter und Regelparameter für die verschiedenen Bearbeitungsarten im Maschinendauerlauf, sowie die Erzeugung von produktionsnahen Testteilen unter Verwendung der Bearbeitungsparameter für die verschiedenen Bearbeitungsarten. Dieser Verfahrensablauf muss vor der Produktion, d.h. schon von dem Bearbeitungsprozess sicherstellen, dass das Zusammenspiel aus den verfügbaren Bearbeitungsparametern, dem zu bearbeitenden Material und dem Maschinenzustand eine prozesssichere Produktion ermöglicht.

Üblicherweise werden die genannten Aufgaben von Maschinenbedienern durchgeführt, die aufgrund ihrer Erfahrung geeignete Testprogramme erstellen, die dann von der Laserbearbeitungsmaschine ausgeführt werden. Für jede Aufgabe und jedes zu bearbeitende Material wird dazu ein eigenes Steuerungsprogramm programmiert. Diese Vorgehensweise ist sehr zeitaufwändig, und ein einheitliches Vorgehen durch unterschiedliche Bediener lässt sich nur mit hohem Dokumentations- und Informationsaufwand sicherstellen.

In der JP 04070908 A ist eine automatische Programmiereinrichtung für eine Laserbearbeitungsmaschine beschrieben, bei der eine Wissensdatenbank vorgesehen ist, in der Expertenwissen über die Laserbearbeitung hinterlegt ist. Eine Entscheidungsfunktion bestimmt mit Hilfe des Expertenwissens die optimalen Bearbeitungsparameter, die an eine Funktion zur Erzeugung eines NC-Programms weitergegeben werden. Die Wissensdatenbank kann über eine Dialogfunktion von einem Bediener mit Expertenwissen gefüllt werden.

Aus der JP 2002239760 A sind ein Verfahren und eine Vorrichtung bekannt geworden, bei denen optimale Bearbeitungsparameter bestimmt werden, indem versuchsweise Bearbeitungsparameter mit Ausnahme einer Bearbeitungsgeschwindigkeit festgelegt werden. Bei konstanten Bearbeitungsparametern wird dann die Bearbeitungsgeschwindigkeit variiert, um den Wertebereich der bei diesen Bearbeitungsparametern möglichen Bearbeitungsgeschwindigkeiten zu ermitteln. Dieser Vorgang wird unter Veränderung der Bearbeitungsparameter so lange wiederholt, bis die optimalen Bearbeitungsparameter aufgefunden werden, bei denen der Wertebereich der für die Bearbeitung zur Verfügung stehenden Bearbeitungsgeschwindigkeiten maximal ist.

Aus der JP 07001286 A ist ein Programmierverfahren bekannt geworden, bei dem einem Bediener eine Auswahlfunktion zur Auswahl einer Kombination von für einen Bearbeitungsprozess charakteristischen Eingabewerten zur Verfügung gestellt wird. Anhand dieser Eingabewerte, z.B. der Bearbeitungsart, wird mit Hilfe von Parameter-Datensätzen eine automatische Entscheidung über die optimalen Bearbeitungsparameter des Bearbeitungsprozesses getroffen.

Die JP 03230878 A beschreibt ein Verfahren und eine Vorrichtung zum automatischen Festlegen von Output-Bedingungen eines Laserstrahls, z.B. dessen Leistung und Pulsfrequenz, sowie zum Festlegen des Gasdrucks eines die Laserbearbeitung unterstützenden Gasstroms. Hierzu werden aus einem NC-Bearbeitungsprogramm Parameterwerte wie Materialart und Materialdicke ausgelesen und ein zugehöriger Parameter-Datensatz ermittelt. Aus dem Parameter-Datensatz werden dann in Abhängigkeit von einer ebenfalls aus dem NC-Bearbeitungsprogramm ausgelesenen Bearbeitungsgeschwindigkeit die Output-Bedingungen und der Gasdruck für die Laserbearbeitung bestimmt.

Aus der WO 01/50404 A1 ist ein Verfahren zur parametrischen Programmierung einer Produktionslinie eines Laserschneidsystems bekannt geworden. Das Verfahren umfasst: Empfangen einer Daten-Datei in dem Laser-Schneidsystem, Umwandeln der Daten-Datei in eine Befehls-Datei, bei der es sich um eine NC-Datei handeln kann, sowie Betreiben des Laserschneidsystems mit der Befehls-Datei. Die Daten-Datei enthält Eigenschaften des von dem Laserschneidsystem erzeugten Werkstücks. Das Verfahren umfasst ebenfalls das Programmieren des Laserschneidsystems mit einem parametrischen Computerprogramm zum Empfangen der Daten-Datei.

In dem Artikel "A laser beam machining (LBM) database for the cutting of ceramic tile" von I. Black et al., Journal of Materials Processing Technology, Bd. 84, Nr. 1-3 Seiten 47-55, wird das Schneiden von keramischen Fliesen mit dem Ziel der Erzeugung einer Laserstrahlbearbeitungs-Datenbank beschrieben. Zu diesem Zweck werden in die Fliesen Testkonturen beispielsweise in Form von Kreisen oder Quadraten geschnitten.

### Aufgabe der Erfindung

Es ist die Aufgabe der vorliegenden Erfindung, ein Verfahren der eingangs genannten Art zur Verfügung zu stellen, bei dem anhand von einer geringen Anzahl von für den Bearbeitungsprozess charakteristischen Eingabewerten automatisch ein NC-Steuerungsprogramm für einen Testlauf erstellt werden kann, das an die technologischen Gegebenheiten des Bearbeitungsprozesses angepasst ist.

### Gegenstand der Erfindung

Diese Aufgabe wird erfindungsgemäß gelöst durch ein Verfahren der eingangs genannten Art, umfassend die Schritte: Bereitstellen eines NC-Grundprogramms, das mindestens eine Kontur-Variable für die mindestens eine bei dem Testlauf zu erzeugende Testkontur sowie mindestens eine Entscheidungsfunktion zur Wertebelegung der Kontur-Variablen mit einer Kontur-Variablen umfasst, wobei die Kontur-Variable eine Konturart der zu erzeugenden Testkontur ist, Bereitstellen einer Auswahlfunktion zur Auswahl einer Kombination von für den Bearbeitungsprozess charakteristischen Eingabewerten durch einen Bediener, sowie Erstellen des NC-Steuerungsprogramms aus dem NC-Grundprogramm durch automatisches Ausführen der Entscheidungsfunktion zur Wertebelegung der Kontur-Variablen mit einem in Abhängigkeit von der gewählten Kombination der Eingabewerte technologisch geeigneten Konturparameter, der beim automatischen Ausführen der Entscheidungsfunktion aus einer vorgegebenen Anzahl von Konturformen der zu erzeugenden Testkontur ausgewählt wird, wobei die Konturformen Mäander, Quadrate, Dreiecke, Rechtecke und Langloch-Mäander umfassen.

Mit Hilfe des erfindungsgemäßen Verfahrens wird in der Maschinensteuerung der Laserbearbeitungsmaschine, nachdem der Maschinenbediener in einer dialoggeführten Auswahl eine Kombination von Eingabewerten ausgewählt hat, durch Ausführen der Entscheidungsfunktion(en) je nach gewählten Eingabewerten automatisch festgelegt, welche Werte die Kontur-Variable(n) erhalten, um technologisch geeignete Schneidkonturen für den Testlauf zu erzeugen. Als Kontur-Variable dient die Art der Testkontur (umfassend: Mäander, Einzelquadrate für dickes Material, Dreiecke, Rechtecke, Langloch-Mäander für schnelles Schneiden etc.), die in Abhängigkeit von Eingabewerten wie Materialart, Materialdicke, Gasart und/oder Schneidverfahren durch die Entscheidungsfunktion mit geeigneten Werten belegt wird. Die geeigneten Werte können direkt im NC-Grundprogramm beinhaltet sein, oder die Entscheidungsfunktion kann zu diesem Zweck mit Konturparameter-Datentabellen verknüpft sein, aus denen sie diese Werte entnimmt.

In einer vorteilhaften Variante umfasst das NC-Grundprogramm mindestens eine Regelparameter-Variable und/oder Bearbeitungsparameter-Variable, deren Wertebelegung mit technisch geeigneten Werten in Abhängigkeit von der gewählten Kombination der Eingabewerte erfolgt. Vorzugsweise sind die technologisch geeigneten Werte für die Bearbeitungs- und Regelparameter in Datentabellen gespeichert, wobei für jede mögliche Kombination der Eingabewerte je eine Datentabelle für die Bearbeitungsparameter und für die Regelparameter in der Maschinensteuerung hinterlegt ist. Für die Belegung der Parameter kann das NC-Grundprogramm in direkter Abhängigkeit von der Auswahl der Eingabewerte mit der richtigen Datentabelle verknüpft und die Werte aus der Datentabelle können in das NC-Grundprogramm eingelesen werden.

In einer bevorzugten Weiterbildung umfasst das NC-Grundprogramm mindestens eine weitere Entscheidungsfunktion, die beim Erstellen des NC-Steuerungsprogramms zur Wertebelegung der Regelparameter-Variablen und/oder der Bearbeitungsparameter-Variablen automatisch ausgeführt wird. In diesem Fall erfolgt die Wertebelegung der Regelparameter- sowie der Bearbeitungsparameter-Variablen analog zur Wertebelegung der Kontur-Variablen mit Hilfe von Entscheidungsfunktionen im NC-Grundprogramm.

In einer vorteilhaften Variante erfolgt das Wertebelegen der Kontur-Variablen, der Bearbeitungsparameter-Variablen und/oder der Regelparameter-Variablen durch die Verknüpfung des NC-Grundprogramms mit Parameter-Datentabellen, insbesondere über die Entscheidungsfunktionen, und Auslesen der Werte aus den Parameter-Datentabellen. Die Datentabellen sind vorzugsweise in einer oder mehreren Datenbanken abgelegt, die als Wissensspeicher der Steuerung dienen und unabhängig vom NC-Steuerungsprogramm für den Testlauf zur Datenermittlung/- absicherung auch von anderen Steuerungsprogrammen für tatsächlich zu produzierende Teile genutzt werden können.

Bevorzugt werden die Eingabewerte ausgewählt aus der Gruppe umfassend: Materialart, Materialdicke, Gasart des Bearbeitungsgases, Brennweite der Fokussieroptik im Bearbeitungskopf der Laserbearbeitungsmaschine, Düsendurchmesser der Bearbeitungsdüse am Bearbeitungskopf und Bearbeitungsart (Einstechen, Stickstoffschneiden, Sauerstoffschneiden, Stickstoff-Hochdruckschneiden, Stickstoff-, Sauerstoff- oder Druckluft-Hochgeschwindigkeitsschneiden, Druckluftschneiden, plasmaunterstütztes Schneiden, Kennzeichnen, Körnen, Abdampfen, Schweißen, etc.). Die Eingabewerte definieren somit, welches Material auf welche Art bearbeitet werden soll.

Weitere Kontur-Variablen können ausgewählt werden aus der Gruppe umfassend: Konturgröße, Konturabstand, Konturrundungsradius, Anfahrstreckenlänge und Anfahrrichtung. In Abhängigkeit von den ausgewählten Eingabewerten erfolgt durch die Entscheidungsfunktionen im NC-Grundprogramm automatisch die Belegung der Kontur-Variablen mit technologisch geeigneten Werten. Es wird also die Art der Kontur s.o. (z.B. Mäander, geschlossenes Quadrat oder auch nur ein Einstichloch), die Größe der Kontur(en), der Abstand bzw. die Dichte einzelner Konturen oder Konturteile, der notwendige Rundungsradius von Ecken in der Kontur, die Anfahrstreckenlänge vom Einstechpunkt zur Kontur und die Anfahrrichtung festgelegt.

Die Bearbeitungsparameter-Variablen werden ausgewählt aus der Gruppe umfassend: Laserleistung, Fokuslage, Bearbeitungsgeschwindigkeit, Tastfrequenz, Bearbeitungsgasdruck, Laserstrahldurchmesser und Düsenabstand zum zu bearbeitenden Werkstück.

Die Regelparameter variieren stark in Abhängigkeit von der gewählten Bearbeitungsart und umfassen beispielsweise minimale Flächeninhalte schneidbarer Konturen in Abhängigkeit von der Materialdicke, minimale Rundungsradien an Ecken von Konturen in Abhängigkeit von der Materialdicke, Festlegungen über eine Variation der Laserleistung beim Einstechen, Anfahren oder Schneiden etc.

Bei einer besonders bevorzugten Variante wird in dem NC-Steuerungsprogramm mindestens ein Steuerungsbefehl zum Aufwärmen oder Abkühlen einer Strahlführungsoptik der Laserbearbeitungsmaschine vor dem Erzeugen einer Testkontur vorgesehen. Insbesondere bei hohen Laserleistungen von z.B. mehr als 3 KW sollte der thermische Zustand der optischen Elemente der Laserbearbeitungsmaschine bei der Materialbearbeitung berücksichtigt werden. Insbesondere in diesem Fall ist es vorteilhaft, wenn die Ermittlung und Absicherung von Parametern sowohl im kalten als auch im warmen Zustand der optischen Elemente durchgeführt wird, wozu das NC-Steuerungsprogramm um einen Programmteil erweitert wird, in dem Aufwärm-und/oder Abkühlzeiten der Laserbearbeitungsmaschine festgelegt werden. Wenn Anwendungen im warmen Zustand der optischen Elemente ausgeführt werden sollen, dann wird vor der eigentlichen Testkonturbearbeitung neben dem Werkstück (Blech) eine Vorwärmbewegung ausgeführt, bei der der Laserstrahl mit der Laserleistung gezündet ist, welche bei der nach dem Vorwärmen auszuführenden Konturbearbeitung benötigt wird. Wenn Anwendungen im kalten Zustand ausgeführt werden sollen, wird zuvor typischerweise eine Verweilzeit abgewartet, in welcher der Laserstrahl nicht gezündet ist.

Besonders bevorzugt erfolgt die Wertebelegung mindestens einer der Bearbeitungsparameter-Variablen und/oder der Regelparameter-Variablen mit einer Bandbreite von Werten, die während des Testlaufs variiert werden, wobei bevorzugt die Kontur-Variablen mit einem festen Wert belegt werden. Für die Ermittlung und Optimierung von Bearbeitungs- und/oder Regelparametern wird in diesem Fall mindestens eine dieser Variablen nicht mit einem festen Wert belegt, sondern mit einer Bandbreite möglicher Werte. Dies führt dazu, dass bei der Ausführung des NC-Steuerungsprogramms eine Variation dieses Parameters erfolgt, also im Falle konstanter Kontur-Variablen gleiche Testkonturen unter gleichen Bedingungen mit einem veränderlichen Parameter geschnitten, gekennzeichnet oder abgedampft werden können, was für Ermittlung von optimalen Parametern vorteilhaft ist. Zur Festlegung der Bandbreite können beispielsweise Start- und Stopp-Werte sowie geeignete Schrittweiten dienen.

In einer besonders bevorzugten Variante erfolgt die Wertebelegung mindestens einer der Kontur-Variablen mit einer Mehrzahl von über eine Bandbreite verteilten Werten, die während des Testlaufs variiert werden, wobei bevorzugt die Bearbeitungsparameter-Variablen und/oder die Regelparameter-Variablen mit einem festen Wert belegt werden. In diesem Fall erfolgt eine Absicherung von bereits ermittelten und optimierten Bearbeitungsparametern und/oder Regelparametern, indem bei der Ausführung des NC-Steuerungsprogramms verschieden geformte Konturen oder auch gleichförmige Konturen mit unterschiedlicher Größe und damit unterschiedlichem Flächeninhalt oder auch gleiche Konturen mit unterschiedlichem Rundungsradius an den Ecken geschnitten werden, etc. So wird es möglich, z.B. in einem Absicherungsdauerlauf mit einer festen Belegung der Regel- und Bearbeitungsparameter viele Konturen verschiedener Form und Größe zu schneiden, wobei eine optimale Belegung des Werkstücks (typischerweise einer Blechtafel) mit Konturen durch die automatische Festlegung des Konturabstands durch die Entscheidungsfunktionen sichergestellt wird. Außerdem ist es möglich, minimal schneidbare Flächeninhalte und Rundungsradien als Regelparameter zu ermitteln.

Bevorzugt wird eine Bearbeitungsfunktion für eine oder mehrere der folgenden Tätigkeiten des Bedieners vorgesehen: Bearbeitung der Wertebelegung der Kontur-Variablen, der Bearbeitungsparameter-Variablen und/oder der Regelparameter-Variablen; Auswahl der Kontur-Variablen, Bearbeitungsparameter-Variablen und/oder Regelparameter-Variablen, deren Wertebelegung mit einer Mehrzahl von über eine Bandbreite verteilten Werten erfolgt; und Bearbeitung der Parameter-Datentabellen durch den Bediener. Auf diese Weise ist es dem Maschinenbediener möglich, die Testaufgabe zu definieren und die im NC-Steuerungsprogramm mit Werten belegten Kontur-, Regel- oder Bearbeitungsparameter manuell zu beeinflussen. Weiterhin kann der Maschinenbediener die auf die oben beschriebene Weise ermittelten optimalen Parameter in den Parameter-Datentabellen für die Regel- und/oder Bearbeitungsparameter speichern.

Besonders bevorzugt sind die Auswahlfunktion und die Bearbeitungsfunktion in derselben Dialogfunktion an einer Bedienoberfläche implementiert. Die Bedienoberfläche kann an einem Bedienpult der Laserbearbeitungsmaschine vorgesehen sein und ermöglicht dem Maschinenbediener sowohl die Kontrolle über den Testlauf als auch das Hinterlegen der beim Testlauf ermittelten Parameterwerte in den zugehörigen Datentabellen.

Ein weiterer Aspekt der Erfindung ist implementiert in einem Computerprogrammprodukt, welches Codemittel aufweist, die zum Durchführen aller Schritte des oben beschriebenen Verfahrens zum Erstellen eines NC-Steuerungsprogramms angepasst sind, wenn das Programm auf einer Datenverarbeitungsanlage abläuft. Das Computerprogrammprodukt kann bevorzugt als Software realisiert sein, welche die oben beschriebenen Funktionen zur Verfügung stellt. Als Datenverarbeitungsanlage zum Ablauf der Software kann eine Steuerungseinheit der Laserbearbeitungsmaschine dienen, welche auch die Bedienoberfläche zur Verfügung stellt.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Flussdiagramm einer Variante des erfindungsgemäßen Verfahrens zum Erstellen eines NC-Steuerungsprogramms für die Steuerung eines Testlaufs einer Laserbearbeitungsmaschine,
- Fig. 2a-c: schematische Darstellungen von bei einem Testlauf durch Laserschneiden erzeugten Mäandern (Fig. 2a), Quadraten (Fig. 2b) und Langlöchern (Fig. 2c) als Testkonturen zur Ermittlung von optimalen Bearbeitungsparametern,
- Fig. 3a-d: schematische Darstellungen von Testkonturen beim Einstechen, Anfahren und Schneiden von Kreisen während eines Testlaufs,
- Fig. 4a,b: schematische Darstellungen von Testkonturen zum Ermitteln von Regelparametern, und
- Fig. 5: eine schematische Darstellung von Testkonturen zur Absicherung von Parameter-Datensätzen.

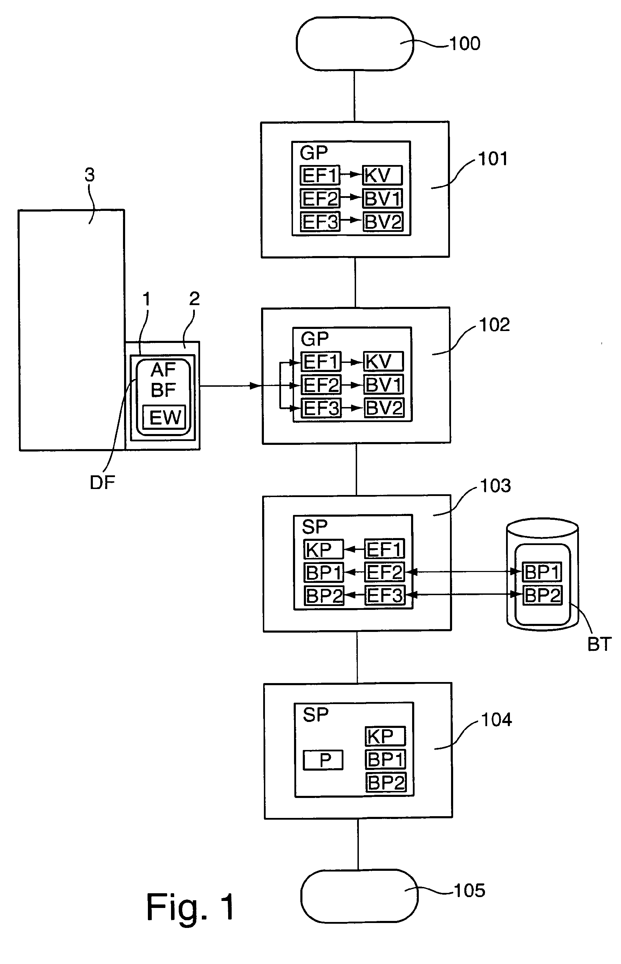

**Fig. 1** zeigt ein Flussdiagramm einer Variante eines Verfahrens zum automatischen Erstellen eines NC-Steuerungsprogramms für die Steuerung eines Testlaufs zur Ermittlung bzw. zur Optimierung der Fokuslage und der Bearbeitungsgeschwindigkeit eines Bearbeitungsprozesses an einer Laserbearbeitungsmaschine.

Nach dem Start des Verfahrens in einem ersten Schritt **100** wird in einem zweiten Schritt **101** ein NC-Grundprogramm **GP** bereitgestellt, das eine Kontur-Variable **KV** für beim Testlauf zu erzeugende Testkonturen enthält. Als Kontur-Variable KV dient im vorliegenden Beispiel die Konturart, d.h. die Art der zu erzeugenden Testkontur, die eine vorgegebene Anzahl von Konturformen, z.B. Mäander, Quadrate, Dreiecke, Rechtecke, Langloch-Mäander etc. umfasst. Eine Entscheidungsfunktion **EF1** ist der Kontur-Variablen KV zugeordnet und dient deren Wertebelegung, d.h. der Auswahl einer Konturform aus der vorgegebenen Anzahl von Konturformen, wie weiter unten im Einzelnen dargestellt ist.

Ferner umfasst das NC-Grundprogramm GP eine erste Bearbeitungsparameter-Variable **BV1** "Fokuslage" sowie eine zweite Bearbeitungsparameter-Variable **BV2** "Bearbeitungsgeschwindigkeit". Eine zweite und dritte Entscheidungsfunktion **EF2, EF3** sind den beiden Bearbeitungsparameter-Variablen BV1, BV2 zugeordnet und dienen ebenfalls zu deren Wertebelegung.

Sowohl die Wertebelegung der Kontur-Variablen KV als auch der Bearbeitungsparameter-Variablen BV1, BV2 erfolgt in Abhängigkeit von einer Kombination von für den Bearbeitungsprozess charakteristischen Eingabewerten **EW,** die in einem nachfolgenden Schritt **102** von einem Bediener an einer Bedienoberfläche **1** eines Bedienpults **2** einer Laserbearbeitungsmaschine **3,** die hierzu eine Dialogfunktion **DF** mit einer Auswahlfunktion **AF** bereitgestellt, ausgewählt wird. Zu diesen Eingabewerten EW gehören u.a. die zu bearbeitende Materialart, die Materialdicke, die Art des Bearbeitungsgases, die Brennweite der Fokussieroptik, der Düsendurchmesser und die Bearbeitungsart, z.B. Einstechen, Schneiden, Kennzeichnen, Körnen, Abdampfen, Schweißen etc. Im vorliegenden Fall wird vom Bediener ein dünnes Material von ca. 1 bis 12 mm ausgewählt, an dem als Bearbeitungsprozess ein Schneidprozess durchgeführt werden soll. Außerdem legt der Bediener in der Dialogfunktion DF mit Hilfe einer Bearbeitungsfunktion **BF** fest, dass die Bearbeitungsparameter-Variablen BV1 und BV2 über eine Bandbreite von Werten variiert werden sollen.

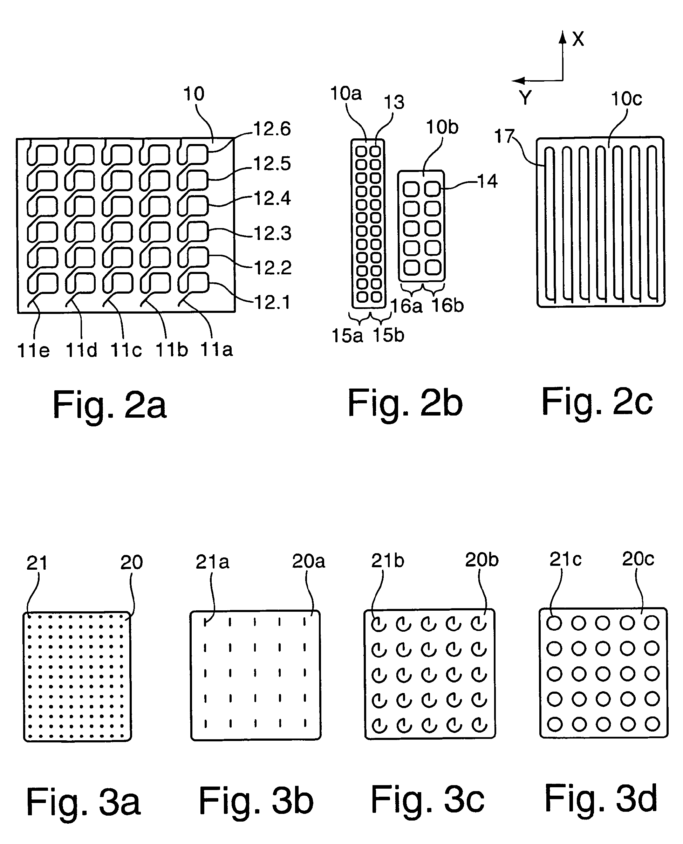

Auf Grundlage der Kombination der Eingabewerte EW wird in einem nachfolgenden Schritt **103** zur automatischen Erstellung eines NC-Steuerungsprogramms **SP** in dem NC-Grundprogramm GP die Kontur-Variable KV durch die Entscheidungsfunktion EF1 mit einer technologisch geeigneten Testkontur als Kontur-Parameter **KP** belegt, im vorliegenden Beispiel für ein in **Fig. 2a** gezeigtes, eine geringe Dicke aufweisendes Werkstück **10** mit einer Mäander-Struktur **11a-e.**

Auf dieselbe Weise werden auch weitere (in Fig. 1 nicht gezeigte) Kontur-Variable wie die Testkonturgröße (je dicker das Material oder je höher die Schneidgeschwindigkeit, umso größer die Kontur), die Testkonturdichte (je dicker das Material, umso größer der Abstand benachbarter Konturteile), der Konturabstand, der Konturrundungsradius, die Anfahrstreckenlänge und die Anfahrrichtung mit geeigneten Kontur-Parametern belegt.

Die Wertebelegung der Bearbeitungsparameter-Variablen BV1, BV2 erfolgt, indem die zugehörigen Entscheidungsfunktionen EF2, EF3 technologisch geeignete Bearbeitungsparameter BP1, BP2 aus einer Bearbeitungsparameter-Tabelle **BT** auslesen, mit der sie verknüpft sind. Für die Wertebelegung der Bearbeitungsparameter-Variablen BV1, BV2 wird in diesem Fall, d.h. für die Parameter-Optimierung, ein Standard-Wert und ein zu testender Wertebereich aus der Bearbeitungsparameter-Tabelle BT ausgelesen, die vom Bediener akzeptiert oder über die Bearbeitungsfunktion BF geändert werden können. Die Bearbeitungsparameter-Variablen BV1, BV2 werden so mit einer Bandbreite von Werten für die Bearbeitungsparameter BP1, BP2 belegt, die während des Testlaufs variiert werden. Auch in diesem Fall werden während des Testlaufs zu jedem Zeitpunkt die Bearbeitungsparameter-Variablen BV1, BV2 mit genau einem Bearbeitungsparameter BP1, BP2 belegt, wobei die Wertebelegung abschnittsweise während des Testlaufs verändert wird.

Ein Testlauf, bei welcher der erste Bearbeitungsparameter BP1 für die Fokuslage mit einer Bandbreite von Werten belegt wird, ist günstig, da bei der Materialbearbeitung die Fokuslage ggf. um die Standard-Fokuslage herum in gewissen Grenzen variiert werden können muss, ohne dass die Prozesssicherheit oder Bearbeitungsqualität hierbei merklich abnehmen darf. In Fig. 2a ist gezeigt, wie bei dem Werkstück 10 eine solche Fokuslagebandbreitenaufnahme durchgeführt wird, indem an jedem der Mäander 11a-e sechs identische Testkonturabschnitte **12.1** bis **12.6** jeweils mit unterschiedlicher Fokuslage geschnitten werden, wobei die Variation der Fokuslage zwischen den Testkonturabschnitten 12.1 bis 12.6 automatisch erfolgt, wobei die übrigen Bearbeitungsparameter sowie Kontur-Parameter konstant bleiben.

Eine solche Wertevariation kann auch für andere Schneidparameter wie Laserleistung, Tastfrequenz, Düsenabstand, Schneidgeschwindigkeit, Gasdruck und Laserstrahldurchmesser durchgeführt werden. In Fig. 2a wird beispielsweise bei dem Testlauf zwischen den einzelnen Mäandern 11 a-e jeweils die Bearbeitungsgeschwindigkeit als zweiter Bearbeitungsparameter BP2 variiert, und zwar indem die Bearbeitungsgeschwindigkeit beginnend bei 1 m/min beim ersten Mäander 11 a um jeweils 0,2 m/min erhöht wird. Durch die Variation von zwei Bearbeitungsparametern BP1, BP2 während des Testlaufs entlang von zwei unterschiedlichen Bearbeitungsrichtungen X, Y können an demselben Werkstück 10 somit zwei Bearbeitungsparameter BP1, BP2 gleichzeitig über eine Bandbreite variiert werden.

Da bei Lasern mit Nennleistungen oberhalb von ca. 3 KW der thermische Zustand der optischen Elemente der Laserbearbeitungsmaschine bei der Materialbearbeitung berücksichtigt werden muss, sollte eine Parametervariation sowohl im kalten als auch im warmen Zustand der optischen Elemente durchgeführt werden. Wird als Eingabewert EW ein Laser mit einer entsprechenden Leistung vom Bediener ausgewählt, kann in einem nachfolgenden Schritt **104** zusätzlich ein Programmteil **P** in dem NC-Steuerungsprogramm SP vorgesehen werden, in dem Aufwärm- und/oder Abkühlzeiten der Laserbearbeitungsmaschine 3 festgelegt werden. So können beispielsweise an dem Werkstück 10 von Fig. 2a zwei nacheinander als Testkonturen erzeugte Mäander 11a-e mit jeweils identischen Bearbeitungsgeschwindigkeiten, aber der erste Mäander 11a, 11 c, 11e im warmen und der zweite Mäander 11 b, 11 d im kalten Zustand der internen und externen Optiken geschnitten werden.

Hierzu wird vor der Erzeugung eines im warmen Zustand geschnittenen Mäanders 11a, 11c, 11e vor der eigentlichen Konturbearbeitung neben dem Werkstück 10 eine "Vorwärmbewegung" ausgeführt, bei der der Laserstrahl mit der Laserleistung gezündet ist, welche bei der nach dem Vorwärmen auszuführenden Konturbearbeitung benötigt wird. Die Dauer (typischerweise 30 s), Länge (für gewöhnlich eine Hin- und Her-Bewegung von 100 mm) und Achsrichtung der Vorwärmbewegung können durch den Bediener verändert werden. Für die Erzeugung der im kalten Zustand geschnittenen Mäander 11 b, 11 d wird zuvor typischerweise eine Verweilzeit von 20 s abgewartet, bei der der Laserstrahl nicht gezündet ist. Die Dauer dieser Verweilzeit ist hierbei ebenso veränderbar wie die der Vorwärmzeit.

Nachdem die Konfiguration des NC-Steuerungsprogramms in einem Schritt **105** abgeschlossen wurde, wird typischerweise ein Testlauf durchgeführt, indem das NC-Steuerungsprogramm SP auf der Laserbearbeitungsmaschine 3 abgearbeitet wird. Nach dem Ende des Testlaufs kann der Bediener am geschnittenen Werkstück 10 erkennen, bei welchen Parameterwerten ein optimales Schneidergebnis und in welchen Grenzen noch akzeptable Ergebnisse erzielt wurden. Der Bediener kann nachfolgend über die Bearbeitungsfunktion BF, die von der Dialogfunktion DF zur Verfügung gestellt wird, die optimalen Parameter bzw. ggf. geeignete Bandbreiten eingeben und in der Bearbeitungsparameter-Tabelle BT abspeichern.

Bei dickeren Werkstücken **10a, 10b,** wie sie in **Fig. 2b** gezeigt sind, können an Stelle der in Fig. 2a gezeigten Mäander 11a-e auch Einzelquadrate **13, 14** als Testkonturen ausgeschnitten werden, wobei auch in diesem Fall die Fokuslage zwischen den Quadraten 13, 14 jeder der zwei nebeneinander liegenden Reihen **15a, 15b** bzw. **16a, 16b** variiert wird. Die erste der beiden Reihen 15a, 16a von Quadraten 13, 14 können hierbei jeweils in warmem Zustand der optischen Elemente geschnitten werden, wohingegen die zweiten Reihen 15b, 16b im kalten Zustand geschnitten werden.

Insbesondere wenn es sich beim Bearbeitungsprozess um Hochgeschwindigkeitsschneiden handelt oder wenn eine Bearbeitungsgeschwindigkeit größer als 15 m/min gewählt wird, sind Langlöcher **17,** wie sie in **Fig. 2c** gezeigt sind, als Teststrukturen besonders geeignet und materialsparend. Beim Hochgeschwindigkeitsschneiden müssen die Testkonturen hinreichend lang sein, damit hohe Bearbeitungsgeschwindigkeiten über eine Strecke von einigen Zentimetern erreicht werden können. Es versteht sich, dass die Langlöcher 17 auch um 90° gedreht erzeugt werden können, d.h. entlang der Y-Achse, um die Schneideigenschaften der Laserbearbeitungsmaschine 3 auch in dieser Richtung zu testen.

Auch beim Kennzeichnen, Körnen, Abdampfen oder Schweißen und beim Einstechen können für Parameter wie Fokuslage, Düsenabstand, Gasdruck, usw. einzelne Datensätze überprüft oder Bandbreiten aufgenommen werden, wie nachfolgend anhand der **Fign. 3a****-d** für das Einstechen dargestellt wird. Fig. 3a zeigt diesbezüglich ein Werkstück **20** mit einer Bandbreitenaufnahme von zwei Bearbeitungsparametern, z.B. Fokuslage und Düsenabstand, die in der X- bzw. Y-Richtung variiert werden, wobei als erste Option lediglich Einstiche **21** vorgenommen wurden. Fig. 3b zeigt ein entsprechendes Werkstück **20a,** bei dem sowohl eingestochen wird als auch eine Anfahrstrecke **21a** in X-Richtung zurückgelegt wird; der Rest einer auszuschneiden Kreiskontur an dem Werkstück 20a wird hierbei ohne Laserleistung, aber mit anstehendem Schneidgas abgefahren. Nach dem Anfahren kann, wie in Fig. 3c gezeigt, an einem Werkstück **20b** auch ein %-Kreis **21b** oder, wie in Fig. 3d anhand eines weiteren Werkstücks **20c** gezeigt, ein Vollkreis **21c** geschnitten werden.

Die jeweilige Option, z.B. nur Einstechen, Einstechen mit Anfahren, Einstechen mit Anfahren und zusätzlichem Kontur-Schneiden richtet sich nach der Belegung der Kontur-Variablen KV mit einem Kontur-Parameter KP, die wiederum von den Eingabewerten EW abhängt. Die zu schneidende Kontur ist im oben dargestellten Beispiel jeweils ein Kreis, dessen Größe in Abhängigkeit von Materialart und -dicke, Gasart und Schneidart automatisch festgelegt wird. Die Aufteilung des Einstechens und Schneidens in verschiedene Teilabläufe, wie oben dargestellt, ermöglicht es, auftretende Probleme - z.B. eine Verschmutzung der Schneidlinse oder der Bearbeitungsdüse - den einzelnen Bearbeitungsphasen zuzuordnen und kann daher zur Fehlersuche verwendet werden, da die Ursachen der Verschmutzung in diesem Fall gezielt ermittelt werden können.

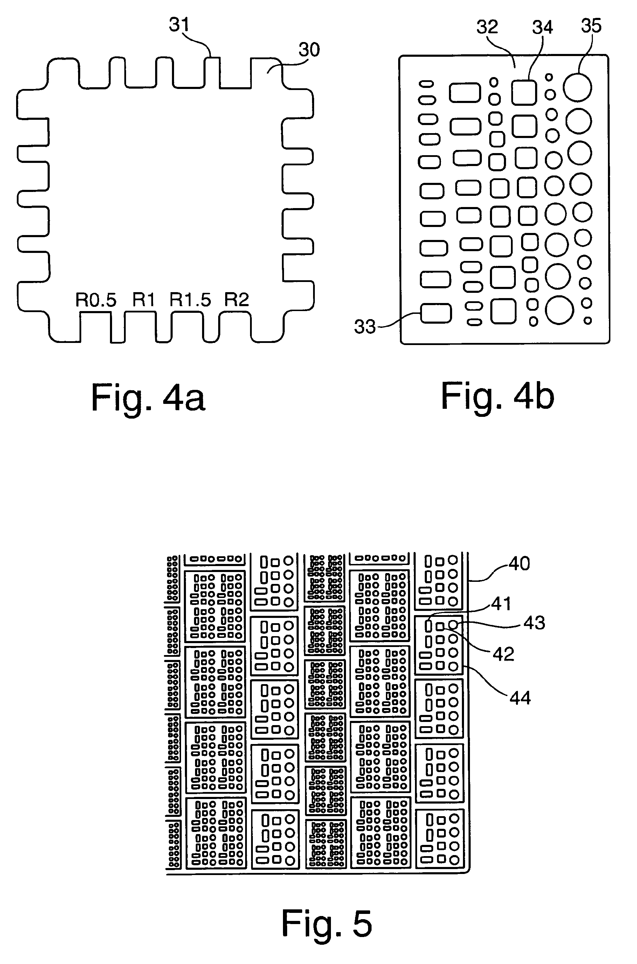

Analog zur oben im Zusammenhang mit den Fign. 1 bis 3 gezeigten Ermittlung bzw. Optimierung von Bearbeitungsparametern ist es alternativ oder zusätzlich auch möglich, Regelparameter für den Bearbeitungsprozess zu ermitteln, z.B. minimal zulässige Rundungsradien. Hierzu können, wie in **Fig. 4a** gezeigt, entlang einer von den gewählten Eingabewerten EW abhängigen Testkontur **31** an einem Werkstück **30** Richtungswechsel mit unterschiedlichen Rundungsradien **R0.5, R1, R1.5, R2** verrundet werden. Abhängig vom Bearbeitungsergebnis können auf diese Weise minimal zulässige Rundungsradien als Regelparameter festgelegt werden.

**Fig. 4b** zeigt als weiteres Beispiel für die Ermittlung von Regelparametern die Ermittlung von Konturgrenzwerten an einem Werkstück **32,** bei dem die Kontur-Variable "Konturart" als Rechteck **33,** Quadrat **34,** bzw. Kreis **35** definiert und die Variable "Konturgröße" mit einer Bandbreite unterschiedlicher Werte belegt wurde. Abhängig vom Bearbeitungsergebnis können für die gewählte Materialart und Dicke des Werkstücks 32 sowie das gewählte Schneidverfahren auf diese Weise minimal bearbeitbare Flächeninhalte als Regelparameter festgelegt werden.

Zur Ermittlung eines optimalen Regelparameters für das Erzeugen so genannter "Microjoints" beim Laserschneiden (nicht gezeigt) kann ebenfalls die entsprechende Regelparameter-Variable mit einer Bandbreite von Werten belegt werden. Ein "Microjoint" wird in der Produktion am Kontur-Ende oder auch mitten in Konturen erzeugt, indem eine Strecke von einigen Zehntelmillimetern nicht geschnitten wird. Damit wird erreicht, dass die Kontur am Ende der Bearbeitung nicht vollständig freigeschnitten wird, so dass das freigeschnittene Teil nicht zwischen Auflagestegen abkippt. Diese Strecke kann ebenfalls als Regelparameter-Variable variiert werden, um in Abhängigkeit von Materialart, Materialdicke und Schneidverfahren optimale Werte zu ermitteln.

Zur Absicherung von Parameter-Datensätzen können frei wählbare Werkstückgrößen mit produktionsnahen Konturen belegt werden. Die technologischen Randbedingungen werden dabei durch die automatische Belegung der Kontur-Variablen mit einer von der gewählten Kombination von Eingabewerten EW abhängigen Bandbreite berücksichtigt. Als Testkonturen werden Rechtecke **41,** Quadrate **42** und Kreise **43** bearbeitet, wie in **Fig. 5** anhand eines Ausschnitts eines weiteren Werkstücks **40** dargestellt ist, bei dem von Testkontur zu Testkontur die Anfahrrichtung jeweils um 90° gedreht wird. Nach einer festgelegten Anzahl von Testkonturen, z.B. zwölf Testkonturen, wird eine Außenkontur **44** geschnitten, damit wie bei einer realen Produktion immer wieder auch längere Konturen gefahren werden. Für Hochgeschwindigkeitsanwendungen kann alternativ oder zusätzlich auch ein Absicherungsdauerlauf bestehend aus Langlöchern (vgl. Fig. 2c) gefahren werden, wodurch sichergestellt wird, dass eine hohe Schneidgeschwindigkeit über lange Strecken erreicht und abgesichert werden kann.

Mit dem oben beschriebenen Verfahren kann automatisch ein NC-Steuerungsprogramm erstellt bzw. konfiguriert werden, das direkt auf der Laserbearbeitungsmaschine abgearbeitet werden kann. Das Verfahren kann hierbei mittels geeigneter Software auf einer Datenverarbeitungsanlage implementiert werden, z.B. an einem Bedienpult der Laserbearbeitungsanlage. Das Ergebnis der Bearbeitung ist entweder eine Einzelteil-Bearbeitung zur Überprüfung eines einzelnen Parameter-Datensatzes, eine Bearbeitung mit variierenden Konturen, Regel- und/oder Bearbeitungsparameten zur Ermittlung geeigneter und/oder optimaler Parameter oder ein Bearbeitungsdauerlauf mit einem festen Parameter-Datensatz zur Absicherung der Parameter. In jedem Fall prüft der Maschinenbediener das bearbeitete Werkstück, um zu entscheiden, ob die verwendeten Parameter für die Bearbeitung geeignet sind, oder um bei einer Parameter-Variation den besten Datensatz zu ermitteln. Insgesamt ermöglicht es das oben beschriebene Verfahren, dass an verschiedenen Laserbearbeitungsmaschinen eine schnelle und einheitliche Vorgehensweise bei der Parameterermittlung und Parameter-Absicherung angewendet werden kann, indem an unterschiedlichen zu bearbeitenden Werkstücken technologisch geeignete Schneidkonturen, Abläufe und Einflussmöglichkeiten automatisch abrufbar in der Maschinensteuerung zur Verfügung gestellt werden, so dass die Erstellung eines Steuerungsprogramms für die Parameterermittlung und für die Parameterabsicherung durch wenige Eingaben in einen Benutzerdialog automatisch erfolgen kann.

## Patentansprüche

1. Verfahren zum Erstellen eines NC-Steuerungsprogramms (SP) für die Steuerung eines Testlaufs zur Erzeugung mindestens einer Testkontur (11 a-e, 13, 14, 17, 21, 21a-c, 31, 33 bis 35, 41 bis 44) für die Ermittlung, Optimierung und/oder Absicherung von Bearbeitungsparametern (BP1, BP2) und/oder Regelparametern eines Bearbeitungsprozesses an einer Laserbearbeitungsmaschine (3), umfassend die Schritte:
Bereitstellen eines NC-Grundprogramms (GP), das mindestens eine Kontur-Variable (KV) für die mindestens eine bei dem Testlauf zu erzeugende Testkontur (11 a-e, 13, 14, 17, 21, 21 a-c, 31, 33 bis 35, 41 bis 44) sowie mindestens eine Entscheidungsfunktion (EF1) zur Wertebelegung der Kontur-Variablen (KV) mit einem Kontur-Parameter (KP) umfasst, wobei die Kontur-Variable (KV) eine Konturart der zu erzeugenden Testkontur ist,
Bereitstellen einer Auswahlfunktion (AF) zur Auswahl einer Kombination von für den Bearbeitungsprozess charakteristischen Eingabewerten (EW) durch einen Bediener, sowie
Erstellen des NC-Steuerungsprogramms (SP) aus dem NC-Grundprogramm (GP) durch automatisches Ausführen der Entscheidungsfunktion (EF1) zur Wertebelegung der Kontur-Variablen (KV) mit einem in Abhängigkeit von der gewählten Kombination der Eingabewerte (EW) technologisch geeigneten Kontur-Parameter (KP), der beim automatischen Ausführen der Entscheidungsfunktion (EF1) aus einer vorgegebenen Anzahl von Konturformen der zu erzeugenden Testkontur ausgewählt wird, wobei die Konturformen Mäander, Quadrate, Dreiecke, Rechtecke und Langloch-Mäander umfassen.

2. Verfahren nach Anspruch 1, bei dem das NC-Grundprogramm (GP) mindestens eine Regelparameter-Variable und/oder Bearbeitungsparameter-Variable (BV1, BV2) umfasst, deren Wertebelegung in Abhängigkeit von der gewählten Kombination der Eingabewerte (EW) erfolgt.

3. Verfahren nach Anspruch 2, bei dem das NC-Grundprogramm (GP) mindestens eine weitere Entscheidungsfunktion (EF2, EF3) umfasst, die beim Erstellen des NC-Steuerungsprogramms (SP) zur Wertebelegung der Regelparameter-Variablen und/oder der Bearbeitungsparameter-Variablen (BV1, BV2) automatisch ausgeführt wird.

4. Verfahren nach Anspruch 2 oder 3, bei dem das Wertebelegen der Kontur-Variablen (KV), der Bearbeitungsparameter-Variablen (BV1, BV2) und/oder der Regelparameter-Variablen durch die Verknüpfung des NC-Grundprogramms (GP) mit Parameter-Datentabellen (BT), insbesondere über die Entscheidungsfunktionen (EF1, EF2, EF3), und Auslesen der Werte (KP, BP1, BP2) aus den Parameter-Datentabellen (BT) erfolgt.

5. Verfahren nach einem der vorhergehenden Ansprüche, bei dem die Eingabewerte (EW) ausgewählt sind aus der Gruppe umfassend: Materialart, Materialdicke, Gasart, Brennweite der Fokussieroptik, Düsendurchmesser und Bearbeitungsart.

6. Verfahren nach einem der vorhergehenden Ansprüche, bei dem weitere Kontur-Variablen (KV) ausgewählt sind aus der Gruppe umfassend: Konturgröße, Konturabstand, Konturrundungsradius, Anfahrstreckenlänge und Anfahrrichtung.

7. Verfahren nach einem der vorhergehenden Ansprüche, bei dem die Bearbeitungsparameter-Variablen (BV1, BV2) ausgewählt sind aus der Gruppe umfassend: Laserleistung, Fokuslage, Bearbeitungsgeschwindigkeit, Tastfrequenz, Bearbeitungsgasdruck, Laserstrahldurchmesser und Düsenabstand.

8. Verfahren nach einem der vorhergehenden Ansprüche, bei dem in dem NC-Steuerungsprogramm (SP) mindestens ein Steuerungsbefehl (P) zum Aufwärmen oder Abkühlen einer Strahlführungsoptik der Laserbearbeitungsmaschine (3) vor dem Erzeugen von Testkonturen (11 a-e, 13, 14, 17) vorgesehen wird.

9. Verfahren nach einem der Ansprüche 2 bis 8, bei dem die Wertebelegung mindestens einer der Bearbeitungsparameter-Variablen (BV1, BV2) und/oder der Regelparameter-Variablen mit einer Mehrzahl von über eine Bandbreite verteilten Werten erfolgt, die während des Testlaufs variiert werden, wobei bevorzugt die Kontur-Variablen (KV) mit einem festen Wert belegt werden.

10. Verfahren nach einem der vorhergehenden Ansprüche, bei dem die Wertebelegung mindestens einer der Kontur-Variablen (KV) mit einer Mehrzahl von über eine Bandbreite verteilten Werten erfolgt, die während des Testlaufs variiert werden, wobei bevorzugt die Bearbeitungsparameter-Variablen (BV1, BV2) und/oder die Regelparameter-Variablen mit einem festen Wert belegt werden.

11. Verfahren nach einem der vorhergehenden Ansprüche, bei dem eine Bearbeitungsfunktion (BF) für eine oder mehrere der folgenden Tätigkeiten des Bedieners vorgesehen ist:
- Bearbeitung der Wertebelegung der Kontur-Variablen (KV), der Bearbeitungsparameter-Variablen (BV1, BV2) und/oder der Regelparameter-Variablen,
- Auswahl der Kontur-Variablen (KV), Bearbeitungsparameter-Variablen (BV1, BV2) und/oder Regelparameter-Variablen, deren Wertebelegung mit einer Bandbreite von Werten erfolgt, und
- Bearbeitung der Parameter-Datentabellen (BT).

12. Verfahren nach einem der Ansprüche 9 bis 11, bei dem die Auswahlfunktion (AF) und die Bearbeitungsfunktion (BF) in derselben Dialogfunktion (DF) an einer Bedienoberfläche (1) implementiert sind.

13. Computerprogrammprodukt, welches Codemittel aufweist, die zum Durchführen aller Schritte des Verfahrens zum Erstellen eines NC-Steuerungsprogramms nach einem der Ansprüche 1 bis 12 angepasst sind, wenn das Programm auf einer Datenverarbeitungsanlage abläuft.

## Claims

1. A method for creating an NC control program (SP) for controlling a test run for producing at least one test contour (11a-e, 13, 14, 17, 21, 21a-c, 31, 33 to 35, 41 to 44) for determining, optimising and/or validating processing parameters (BP1, BP2) and/or control parameters of a processing operation on a laser processing machine (3), comprising the steps of:
providing a basic NC program (GP) which includes at least one contour variable (KV) for the at least one test contour (11a-e, 13, 14, 17, 21, 21a-c, 31, 33 to 35, 41 to 44) to be produced in the test run and at least one decision function (EF1) for value assignment of a contour parameter (KP) to the contour variable (KV), wherein the contour variable (KV) is a contour type of the test contour to be produced,
providing a selection function (AF) for selection by an operator of a combination of input values (EW) that are characteristic of the processing operation, and
creating the NC control program (SP) from the basic NC program (GP) by automatic execution of the decision function (EF1) for value assignment to the contour variable (KV) of a contour parameter (KP) that is technologically suitable in dependence on the selected combination of input values (EW) and is selected during automatic performance of the decision function (EF1) from a predetermined number of contour shapes of the test contour to be produced, wherein the contour shapes comprise meanders, squares, triangles, rectangles and oblong meanders.

2. A method according to claim 1, in which the basic NC program (GP) includes at least one control parameter variable and/or processing parameter variable (BV1, BV2) whose value assignment is carried out in dependence on the selected combination of input values (EW).

3. A method according to claim 2, in which the basic NC program (GP) includes at least one further decision function (EF2, EF3) which is automatically executed in creating the NC control program (SP) to assign values to the control parameter variable and/or to the processing parameter variable (BV1, BV2).

4. A method according to claim 2 or 3, in which the assignment of values to the contour variable (KV), to the processing parameter variable (BV1, BV2) and/or to the control parameter variable is carried out by linking the basic NC program (GP) to parameter data tables (BT), especially by way of the decision functions (EF1, EF2, EF3), and by reading-out of the values (KP, BP1, BP2) from the parameter data tables (BT).

5. A method according to any one of the preceding claims, in which the input values (EW) are selected from the group comprising: type of material, thickness of material, type of gas, focal length of the focusing lens system, nozzle diameter, and type of processing.

6. A method according to any one of the preceding claims, in which further contour variables (KV) are selected from the group comprising:
size of contour, contour spacing, contour rounding radius, length of approach path, and direction of approach.

7. A method according to any one of the preceding claims, in which the processing parameter variables (BV1, BV2) are selected from the group comprising: laser output power, focus position, processing speed, pulse frequency, processing gas pressure, laser beam diameter, and nozzle spacing.

8. A method according to any one of the preceding claims, in which at least one control command (P) to warm up or cool down a beam-guiding optical system of the laser processing machine (3) before production of test contours (11a-e, 13, 14, 17) is provided in the NC control program (SP).

9. A method according to any one of claims 2 to 8, in which the assignment of values to at least one of the processing parameter variables (BV1, BV2) and/or control parameter variables is carried out with a plurality of values distributed over a range which are varied during the test run, with the contour variables (KV) preferably being assigned a fixed value.

10. A method according to any one of the preceding claims, in which the assignment of values to at least one of the contour variables (KV) is carried out with a plurality of values distributed over a range which are varied during the test run, with the processing parameter variables (BV1, BV2) and/or the control parameter variables preferably being assigned a fixed value.

11. A method according to any one of the preceding claims, in which an editing function (BF) for one or more of the following activities of the operator is provided:
- editing of the value assignment to the contour variables (KV), to the processing parameter variables (BV1, BV2) and/or to the control parameter variables,
- selection of the contour variables (KV), processing parameter variables (BV1, BV2) and/or control parameter variables, the value assignment to which is carried out with a range of values, and
- editing of the parameter data tables (BT).

12. A method according to any one of claims 9 to 11, in which the selection function (AF) and the editing function (BF) are implemented in the same dialogue function (DF) on a user interface (1).

13. A computer program product having code means adapted to carry out all steps of the method for creating an NC control program according to any one of claims 1 to 12 when the program is run on a data-processing system.

## Revendications

1. Procédé de création d'un programme de commande CN (SP) pour la commande d'une passe d'essai destinée à produire au moins un contour d'essai (11a-e, 13, 14, 17, 21, 21a-c, 31, 33 à 35, 41 à 44) pour déterminer, optimiser et/ou sécuriser des paramètres d'usinage (BP1, BP2) et/ou des paramètres de réglage d'un processus d'usinage sur une machine d'usinage au laser (3), comprenant les étapes suivantes :
mise à disposition d'un programme de base CN (GP) qui comprend au moins une variable de contour (KV) pour ledit au moins un contour d'essai (11a-e, 13, 14, 17, 21, 21a-c, 31, 33 à 35, 41 à 44) à produire lors de la passe d'essai ainsi qu'au moins une fonction de décision (EF1) pour l'affectation de valeur à la variable de contour (KV) avec un paramètre de contour (KP), la variable de contour (KV) étant un type de contour du contour d'essai à produire,
mise à disposition d'une fonction de sélection (AF) permettant à un opérateur de sélectionner une combinaison de valeurs d'entrée (EW) caractéristiques du processus d'usinage, et
création du programme de commande CN (SP) à partir du programme de base CN (GP) par exécution automatique de la fonction de décision (EF1) pour l'affectation de valeur à la variable de contour (KV) avec un paramètre de contour (KP) technologiquement approprié en fonction de la combinaison choisie des valeurs d'entrée (EW), lequel est sélectionné à partir d'un nombre prédéfini de formes de contour du contour d'essai à produire lors de l'exécution automatique de la fonction de décision (EF1), les formes de contour comprenant des méandres, des carrés, des triangles, des rectangles et des méandres de trous oblongs.

2. Procédé selon la revendication 1, selon lequel le programme de base CN (GP) comprend au moins une variable de paramètre de réglage et/ou une variable de paramètre d'usinage (BV1, BV2) dont l'affectation de valeur s'effectue en fonction de la combinaison choisie des valeurs d'entrée (EW).

3. Procédé selon la revendication 2, selon lequel le programme de base CN (GP) comprend au moins une autre fonction de décision (EF2, EF3) qui est exécutée automatiquement lors de la création du programme de commande CN (SP) pour l'affectation de valeur à la variable de paramètre de réglage et/ou à la variable de paramètre d'usinage (BV1, BV2).

4. Procédé selon la revendication 2 ou la revendication 3, selon lequel l'affectation de à la variable de contour (KV), à la variable de paramètre d'usinage (BV1, BV2) et/ou à la variable de paramètre de réglage s'effectue par mise en relation du programme de base CN (GP) avec des tableaux de données de paramètres (BT), en particulier au moyen des fonctions de décision (EF1, EF2, EF3), et lecture des valeurs (KP, BP1, BP2) dans les tableaux de données de paramètres (BT).

5. Procédé selon l'une des revendications précédentes, selon lequel les valeurs d'entrée (EW) sont sélectionnées dans le groupe comprenant : type de matériau, épaisseur du matériau, type de gaz, distance focale de l'optique de focalisation, diamètre de la buse et type d'usinage.

6. Procédé selon l'une des revendications précédentes, selon lequel autres variables de contour (KV) sont sélectionnées dans le groupe comprenant : taille du contour, distance du contour, rayon d'arrondi du contour, longueur de la course d'approche et direction d'approche.

7. Procédé selon l'une des revendications précédentes, selon lequel les variables de paramètre d'usinage (BV1, BV2) sont sélectionnées dans le groupe comprenant :
puissance du laser, position focale, vitesse d'usinage, fréquence de cycles, pression du gaz d'usinage, diamètre du faisceau laser et distance de la buse.

8. Procédé selon l'une des revendications précédentes, selon lequel au moins un ordre de commande (P) pour chauffer ou refroidir une optique de guidage de faisceau de la machine d'usinage au laser (3) avant la production de contours d'essai (11 a-e, 13, 14, 17) est prévu dans le programme de commande CN (SP).

9. Procédé selon l'une des revendications 2 à 8, selon lequel l'affectation de valeur à au moins une des variables de paramètre d'usinage (BV1, BV2) et/ou des variables de paramètre de réglage s'effectue avec une pluralité de valeurs réparties sur une largeur de bande, que l'on fait varier pendant la passe d'essai, une valeur fixe étant de préférence affectée aux variables de contour (KV).

10. Procédé selon l'une des revendications précédentes, selon lequel l'affectation de valeur à au moins une des variables de contour (KV) s'effectue avec une pluralité de valeurs réparties sur une largeur de bande, que l'on fait varier pendant la passe d'essai, une valeur fixe étant de préférence affectée aux variables de paramètre d'usinage (BV1, BV2) et/ou aux variables de paramètre de réglage.

11. Procédé selon l'une des revendications précédentes, selon lequel une fonction de traitement (BF) est prévue pour une ou plusieurs des activités suivantes de l'opérateur :
- traitement de l'affectation de valeur aux variables de contour (KV), aux variables de paramètre d'usinage (BV1, BV2) et/ou aux variables de paramètre de réglage,
- sélection des variables de contour (KV), des variables de paramètre d'usinage (BV1, BV2) et/ou des variables de paramètre de réglage dont l'affectation de valeur s'effectue avec une largeur de bande de valeurs, et
- traitement des tableaux de données de paramètres (BT).

12. Procédé selon l'une des revendications 9 à 11, selon lequel la fonction de sélection (AF) et la fonction de traitement (BF) sont implémentées dans la même fonction de dialogue (DF) sur une interface opérateur (1).

13. Produit programme d'ordinateur qui présente des moyens de codage qui sont adaptés à l'exécution de toutes les étapes du procédé de création d'un programme de commande CN selon l'une des revendications 1 à 12 lorsque le programme s'exécute sur un ordinateur.
